# EUROPEAN PATENT SPECIFICATION

(11) **EP 2 492 221 B1**
(45) Date of publication and mention of the grant of the patent: **23.04.2014**
(21) Application number: 12156765.5
(22) Date of filing: 23.02.2012
(51) Int. Cl.: B65G 49/06, E06B 3/673

(54) **Method and device for sealing an insulating glazing**
Verfahren und Vorrichtung zum Versiegeln einer Isolierglasscheibe
Procédé et dispositif de scellement de vitrages isolants

(30) Priority: 23.02.2011 IT TO20110151
(43) Date of publication of application: 29.08.2012
(73) Proprietor: Bottero S.p.A., Cuneo (IT)
(72) Inventor: Balbi, Mario, 12100 CUNEO (IT); Bertoncello, Oriano, 35018 SAN MARTINO DI LUPARI (IT)
(74) Representative: Bergadano, Mirko

(56) References cited:
- EP-A1- 0 301 983
- EP-A2- 1 538 296
- DE-A1- 10 050 469
- DE-B1- 2 846 785

## Description

The present invention relates to an insulating glass production method.

As is known, to produce insulating glass, a first and at least a second glass sheet are positioned facing on opposite sides of an inner spacer frame to form a hollow sheet-frame assembly, in which the spacer frame is normally positioned contacting outer peripheral portions of both glass sheets, and defines with the glass sheets a chamber for inert gas. Keeping the sheets in contact with the frame, a coating or bead of sealant is then deposited on the outer peripheral surface of the sheet-frame assembly to seal the chamber.

In known methods, the sealant is deposited using a sealing machine comprising a horizontal supporting and conveying surface, on which the assembly is placed substantially on edge, and which comprises two aligned powered linear conveyors spaced apart in the travelling direction of the assembly.

Between the two conveyors, the machine comprises a powered sealant dispenser head, which is movable vertically up and down, and rotates about a horizontal axis perpendicular to the vertical.

On machines such as these, the sealant is deposited on the front and rear edges of the sheet-frame assembly with the assembly projecting between the two conveyors and by moving the dispenser head vertically, and is deposited on the top and bottom edges by moving the sheet-frame assembly back and forth between the two conveyors, with the dispenser head in a fixed position. When depositing the sealant, the assembly is held by suction cup devices attached to one of the outer glass sheets.

In the case of insulating glass with one or more curved or sloping edge portions, the sealant is deposited on each of these by synchronizing the back and forth movement of the sheet-frame assembly with the vertical movement of the dispenser head.

Though widely used, the above sealing method has the drawback of having to move the sheet-frame assembly back and forth with respect to the dispenser head, which makes it difficult to keep the component parts of the assembly in the correct relative positions.

This is substantially due to a 'leading' portion and a 'trailing' portion of the moving assembly projecting as they travel along the path portion separating one conveyor from the other, and to the fact that, normally, not all the glass sheets are retained by the suction cup devices and/or rest on the bottom conveyors.

As a result, rejects not up to quality standard are common.

The sealing machines employed are also fairly complex and expensive, and must be checked continually to ensure both conveyors are not only perfectly controlled and synchronized with each other to move in time in both travelling directions of the assembly, but are also perfectly synchronized with the movement and rotation of the dispenser head. Any minor positioning errors or sharp stopping/starting of the conveyors, in fact, produce breaks and/or flaws in the sealant bead, thus impairing sealing of the inner chamber/s.

From document DE 28 46 785 B1 it is known to deposit the bead of sealant material supporting the sheets from below using wheels rotating about axes orthogonal to the sheets and vertically displaceable parallel to themselves between a raised position and a lowered position of support, in which they are placed below and faced to the glass sheet.

In EP 0301983 A the sheet is supported by motorized rollers movable orthogonally to the shhet between a retracted position and an advanced position of support of the sheet. When disposed in their retracted position the sheets are supported from below by additional elements on which the plate rests.

It is an object of the present invention to provide an insulating glass production method designed to provide a simple, low-cost solution to the above drawbacks, and which, in particular, prevents relative movement of the glass sheets and frame when sealing the edges, regardless of the number of glass sheets of which the insulating glass is composed.

According to the present invention, there is provided a method of producing insulating glass, as claimed in claim 1.

The present invention also relates to a unit for producing insulating glass.

According to the present invention, there is provided a unit for producing insulating glass, as claimed in claim 4.

A number of non-limiting embodiments of the present invention will be described by way of example with reference to the accompanying drawings, in which:
Figure 1 shows a view in perspective of a first preferred embodiment of a unit for producing insulating glass in accordance with the present invention;
Figures 2 and 3 show larger-scale side and front views respectively of the Figure 1 unit;
Figure 4 shows a view in perspective of an embodiment that does not constitute part of the present invention;
Figures 5 and 6 show larger-scale side and front views respectively of the Figure 4 unit;
Figure 7 shows a view in perspective of a second preferred embodiment of a unit for producing insulating glass in accordance with the present invention.

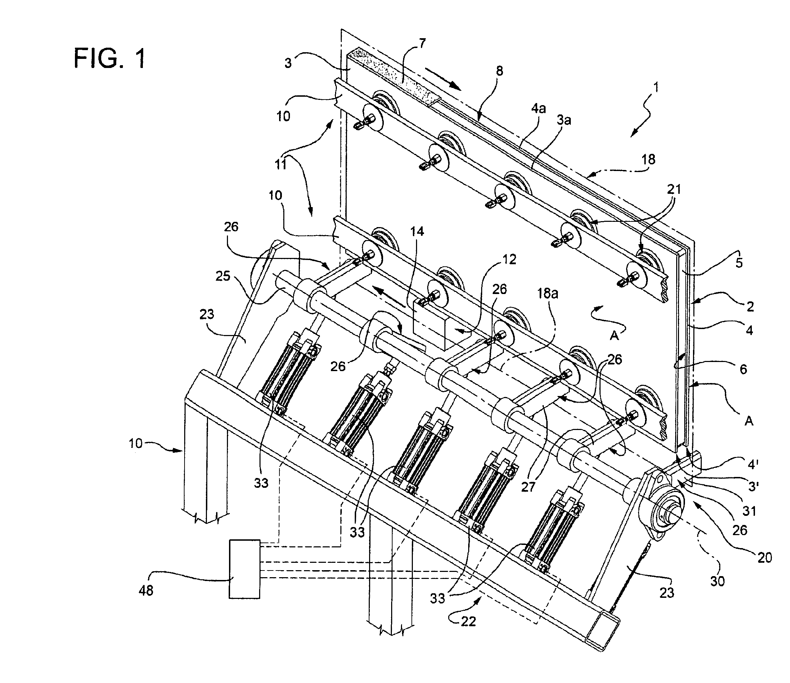

Number 1 in Figures 1 to 3 indicates as a whole a unit for producing insulating glass 2 comprising, in the example shown, two facing lateral glass sheets 3 and 4; a spacer frame 5 fitted between outer annular peripheral portions 3a and 4a of sheets 3 and 4, and defining with sheets 3 and 4 a chamber 6; and a continuous bead 7 of sealant deposited on the outer edge of the glass sheet-frame assembly 8 to seal chamber 6.

Unit 1 comprises a fixed frame 10; a retaining assembly 11 for holding the glass sheet-frame assembly 8 in a fixed vertical sealing position; and a sealing assembly 12 for forming continuous bead 7.

Sealing assembly 12 comprises a known dispenser head 14 (not described in detail) with a nozzle 15 for feeding sealant onto frame 5 and between peripheral portions 3a and 4a of the glass sheets; and a powered articulated control and support arm 16 for moving the dispenser head along an endless path 18 about assembly 8.

As shown in Figures 1 to 3, retaining assembly 11 comprises a supporting device 20 defining a bottom support for one or both of glass sheets 3 and 4; and a number of known suction cup devices 21 (not described in detail) arranged in a substantially vertical plane, and which engage sheet 3 to secure it in a fixed position with respect to frame 10 and on supporting device 20.

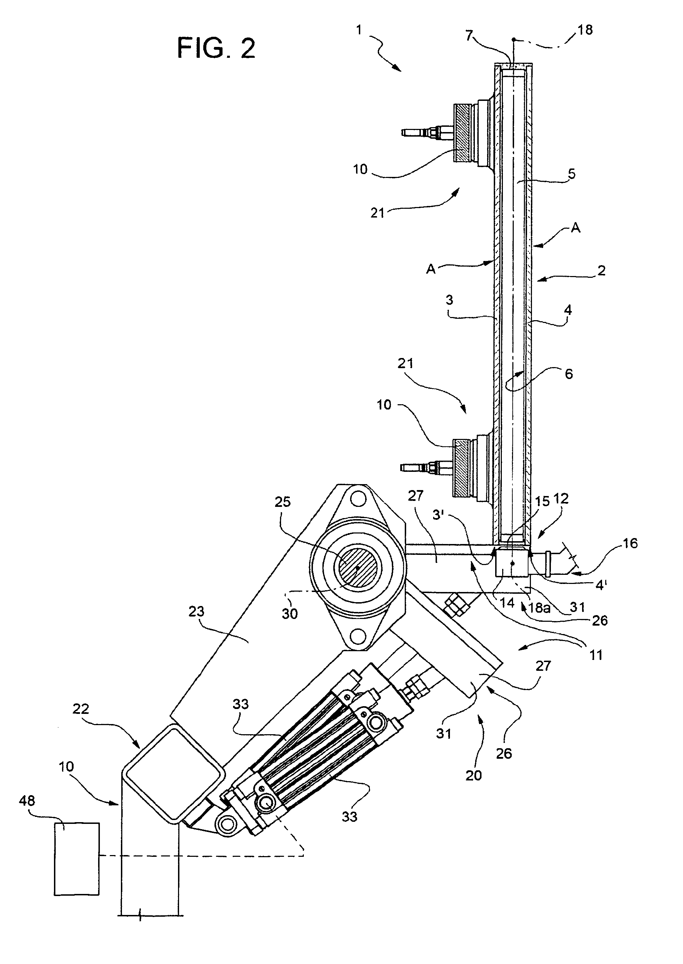

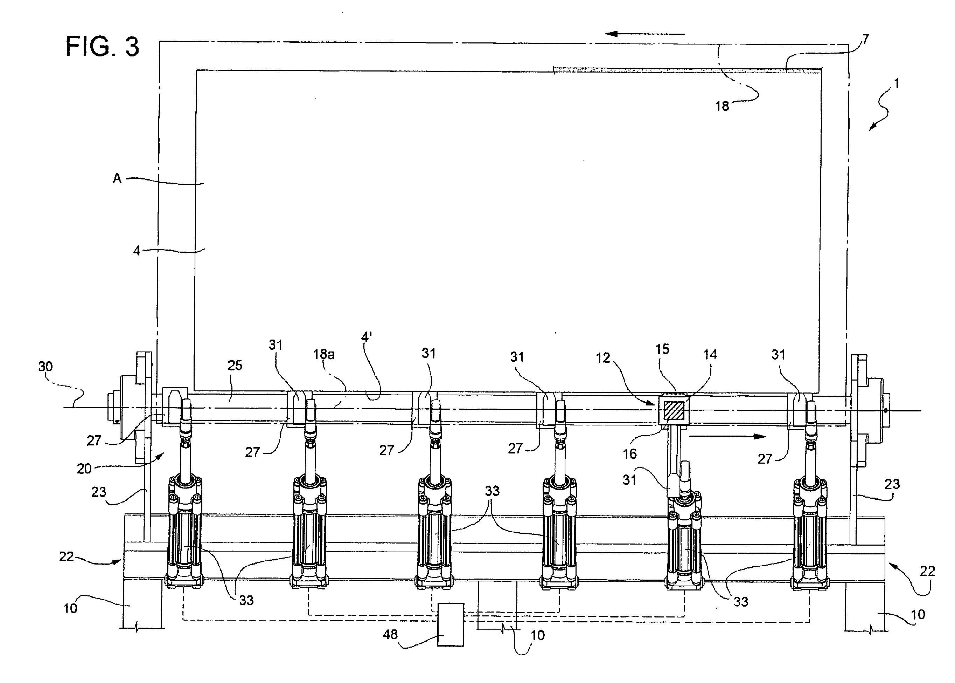

Device 20 comprises an inverted-fork-shaped fastening frame 22 connected integrally to frame 10, and the arms 23 of which are fitted with a horizontal shaft 25 parallel to the main surfaces A of glass sheets 3 and 4; and a number of straight supporting arms 26 spaced along and projecting perpendicularly from shaft 25. Each arm 26 has an end portion 27 hinged to shaft 25 to rotate about an axis 30 common to all of arms 26 and parallel to the bottom edges 3', 4' of sheets 3, 4; and an end portion 31 supporting assembly 8. Each arm 26 is operated, independently of the others and by a respective conveniently pneumatic linear actuator 33, to rotate about axis 30 between two limit positions on opposite sides of path 18 : a raised supporting position, shown by the continuous line in Figures 2 and 3, in which portion 31 supports assembly 8; and a lowered standby position, shown in Figures 2 and 3, in which each arm 26 allows passage of head 14 as it moves along a portion 18a of path 18 parallel to edges 3', 4' of sheets 3,4.

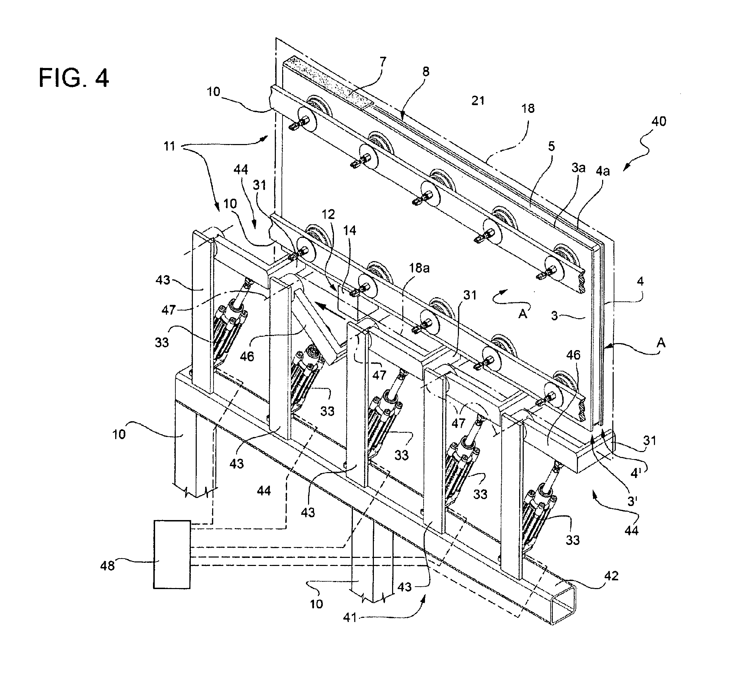

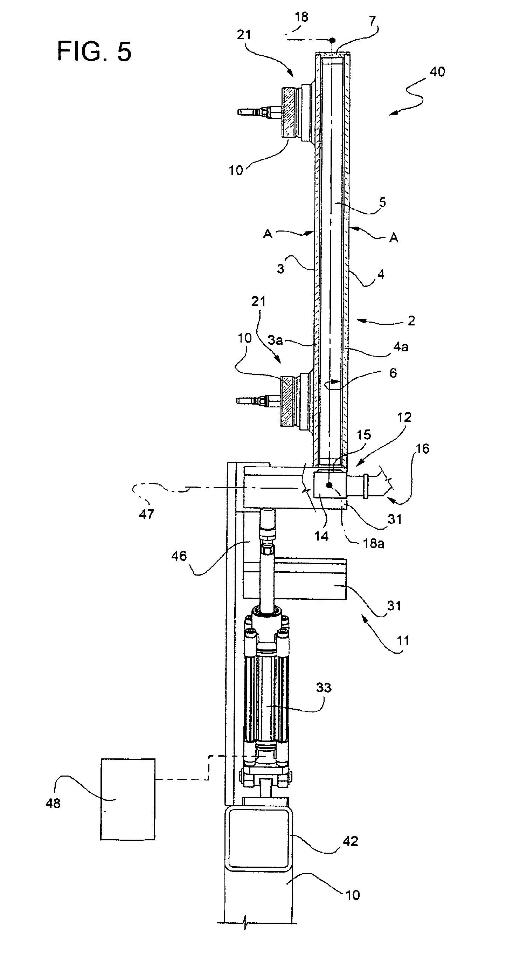

The Figure 4, 5 and 6 embodiment shows a unit 40, which differs slightly in design from unit 1, and the component parts of which are indicated, where possible, using the same reference numbers as for the corresponding parts of unit 1.

Unit 40 comprises a fastening frame 41, which differs from frame 22 by comprising a longitudinal member 42 parallel to edges 3' and 4' and connected integrally to fixed frame 10; and, for each actuator 33, a post 43 connected integrally to longitudinal member 42. In unit 40, each straight arm 26 of unit 1 is replaced with an arm 44, which differs from arm 26 by being L-shaped with one leg defined by supporting portion 31, and the other leg defined by a crank 46 hinged to post 43 and rotated by respective actuator 33 about a respective hinge axis 47, perpendicular to main surfaces A and parallel to the other axes 47, to move supporting portion 31 between said raised and lowered positions (Figures 4, 5 and 6).

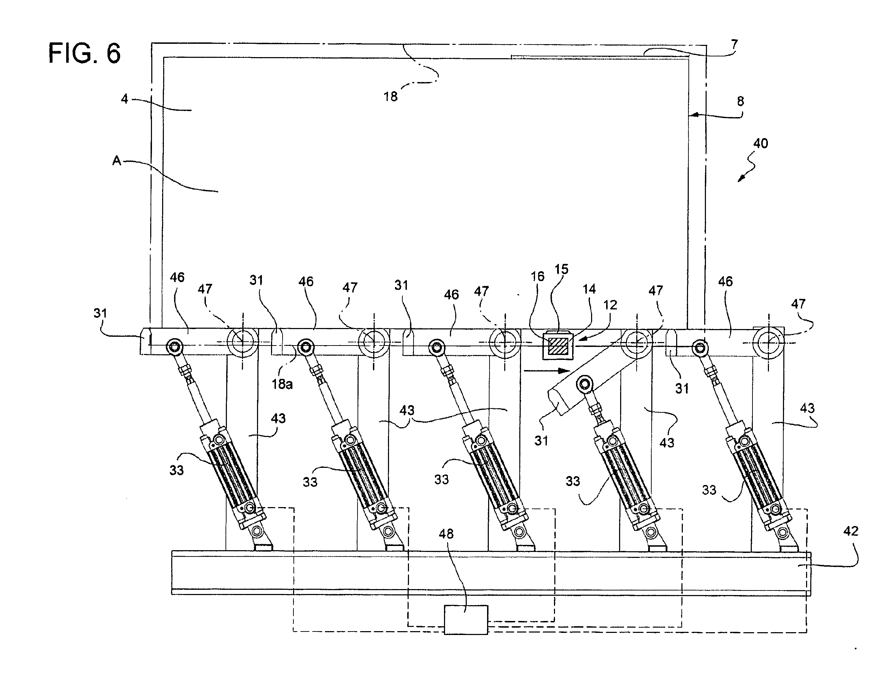

Actuators 33 of both units 1 and 40 are controlled by a central control unit 48, which synchronizes operation of actuators 33 with the movement of head 14 along path 18. More specifically, given the position of head 14 along path 18, central control unit 48 controls actuators 33 so that, as head 14 moves along path portion 18a and nears a supporting portion 31, this is moved from the raised supporting position to the lowered position (Figures 3 and 6) to let head 14 through, and is returned to the raised position once head 14 has passed. The sealant is thus deposited seamlessly, by keeping assembly 8 in a fixed position with respect to frame 10 of unit 1 throughout the sealing operation, i.e. until sealing is completed. That is, throughout the sealing operation, at least sheet 4 or both sheets 3 and 4 rest on a bottom support, which keeps them in a fixed position while still allowing transit of the sealant dispenser head.

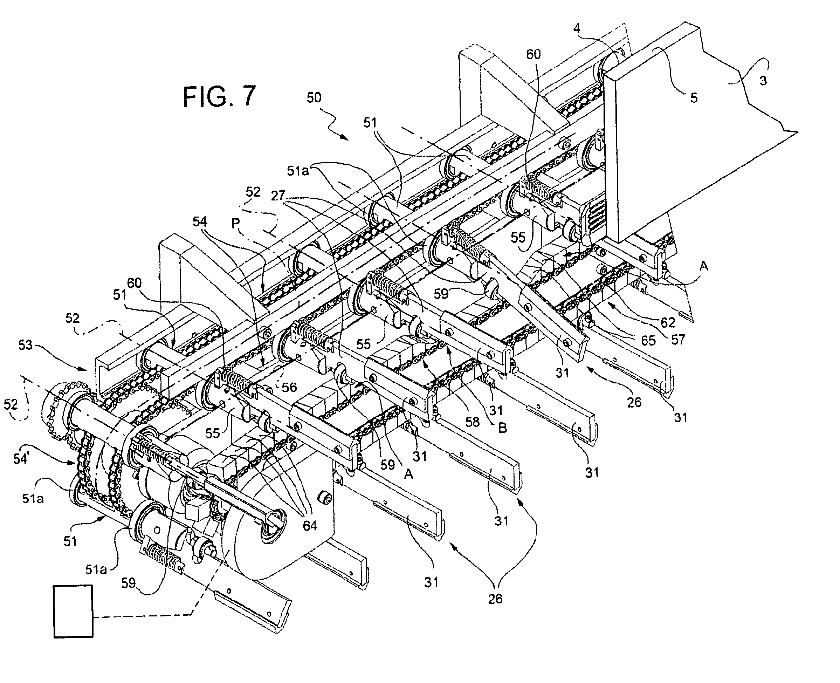

The Figure 7 embodiment shows a unit 50, which differs slightly in design from unit 1, and the component parts of which are indicated, where possible, using the same reference numbers as for the corresponding parts of unit 1.

In unit 50, each arm 26 is fitted to a respective axle shaft 51 having a respective axis 52 and movable by an actuating and guide device 53 along an endless path P common to all of axle shafts 51. In the example shown, actuating and guide device 53 comprises two parallel, transversely spaced, endless rolling tracks 54, one for each wheel 51a of each axle shaft 51; and a powered double chain 54 for moving axle shafts 51 along path P.

Outwards of one of wheels 51a, each axle shaft 51 is fitted integrally with a respective fastening body 55, which projects from the axle shaft, and to which portion 27 of respective arm 26 is hinged by a respective hinge pin to rotate about an axis 56 perpendicular to axis 52 of axle shaft 51.

Arms 26 are rotated about respective axes 56 by a powered cam actuating device 57, which is activated independently of chain 54', is synchronized with the movement of dispenser head 14, and comprises a cam 58 common to all of arms 26 and movable parallel to path P; and, for each arm 26, a roller 59 hinged to relative portion 27 to rotate about an axis perpendicular to axes 52 and 56. Each roller 59 is maintained contacting cam 58 by a respective spring 60 compressed between a shoulder of relative portion 27 and a corresponding part of respective fastening body 55.

In the example shown, cam 58 comprises a further powered chain 62 parallel to and spaced transversely apart from chain 54' so as to face portions 27; and a number of independent radial blocks fitted side by side to the outer periphery of chain 62, and arranged to form a succession A of blocks 64 of constant thickness, and a succession B of blocks 65 of varying thickness, as shown in Figure 7.

The sealant is deposited by maintaining chain 54' stationary, and operating cam 58 so that, as head 14 travels along path portion 18a, cam 58 and respective springs 60 move portions 31 successively from the raised supporting position to the lowered position to let head 14 through, and move portions 31 back into the raised position once head 14 has passed. Once the sealant is deposited, chain 54' is operated to withdraw the finished insulating glass from head 14.

Unlike known methods, the sealing method described therefore eliminates any problems posed by errors in the relative position of the sheets and frame produced when moving the sheet-frame assembly, by virtue of keeping the assembly in a fixed position throughout the sealing operation, i.e. for as long as it takes to deposit the sealant.

Moreover, providing a support made of independent members - which can be detached successively from the sheet-frame assembly for only as long as it takes to let the dispenser head through, and are then restored to the original supporting position - is tantamount to supporting the sheet-frame assembly on a fixed supporting surface, on which, moreover, all the glass sheets are supported. That is, correctly timing detachment and reengagement of individual arms 26 prevents large leading and trailing portions of the assembly from projecting unsupported, especially when depositing the sealant, so the initial position of the sheets with respect to the frame remains unchanged throughout the sealing operation, thus ensuring consistent geometry and quality.

Finally, compared with known solutions, only moving dispenser head 14 in one direction along an endless path improves the quality of the sealant bead deposited, the geometric and sealing characteristics of which therefore remain constant along the whole of the peripheral edge of the sheet-frame assembly.

Clearly, changes may be made to units 1, 40 and 50 as described herein.

In particular, frames 10, 22 and 41, supporting arms 26 and 44, and the way in which arms 26 and 44 are operated may differ from those described by way of example. For example, supporting portions 31 may be operated using the same or a different cam device from the one described, or a connecting rod-crank device, or pneumatic or electric linear actuators for moving supporting positions 31 along straight paths perpendicular to edges 3', 4' of sheets 3, 4.

Units 1, 40 and 50 may obviously also be used for producing insulating glass with more than one chamber, i.e. comprising three or more glass sheets, and two or more inner spacer frames separating adjacent sheets.

## Claims

1. A method of producing insulating glass (2), the method comprising the steps of forming an assembly (8) comprising at least two facing glass sheets (3) (4), and at least one inner spacer frame (5) separating the glass sheets (3) (4); keeping said assembly (8) in a substantially vertical position; and depositing a bead (7) of sealant on an outer peripheral edge of said assembly (8) using a dispenser head (14); said sealant comprising the steps of keeping said assembly (8) stationary throughout the time taken to dispense said sealant and moving said dispenser head (14) along an endless path (18) about said assembly (8); moving said dispenser head (14) along said endless path (18) comprising the steps of resting at least one of said glass sheets (3) (4) on movable supporting straight cantilever arms (26) underneath; detaching one or more of said supporting arms (31) successively from said assembly (8) to let the dispenser head (14) through; and moving at least some of said supporting arms (26) back onto said assembly (8) once said dispenser head (14) has passed, said supporting arms (26) are detached from said assembly (8) by rotating about a substantially horizontal axis (30) (56), parallel to the major or main surfaces (A) of said glass sheets (3) (4); each of said arms (26) projecting perpendicularly from a horizontal shaft (25) coaxial to said axis (30) and being rotatable independently of the other arms about said axis (30) between a raised supporting position and a lowered standby position placed on the opposite sides of said endless path (18).

2. A method as claimed in Claim 1, **characterized in that**, when depositing said sealant, the other of said glass sheets is maintained in a fixed position by retaining means (21) other than said cantilever arms (26).

3. A method as claimed in Claim 1, **characterized by** maintaining said cantilever arms (26) contacting said assembly (8), and moving the cantilever arms (26) parallel to themselves once said sealant is deposited.

4. A unit (1) for producing insulating glass (2) comprising an assembly (8), in turn comprising at least two facing glass sheets (3) (4), at least one inner spacer frame (5) separating said glass sheets (3) (4), and a bead (7) of sealant extending along an outer peripheral edge of said assembly (8); the unit (1) comprising supporting means (11) for supporting said assembly in a substantially vertical position; and a dispenser head (14) for depositing said sealant and forming said bead (7); said supporting means (11) support said assembly (8) in a fixed position, and comprise a number of movable supporting straight cantilever arms (26) beneath at least one of said glass sheets (3) (4), and powered actuating means (33); (53) for moving said supporting cantilever arms (26) to and from a supporting position supporting said assembly (8); the unit (1) also comprising drive means (16) for moving said dispenser head (14) along an endless path (18) about said assembly (8) ach of said supporting cantilever arms (26) projecting perpendicularly from a horizontal shaft (25) coaxial to an horizontal axis (30) (56) and rotating, independently of the other cantilever arms (26) and about said horizontal axis (30) (56) parallel to the major or main surfaces (A) of said glass sheets (3) (4) between a raised supporting position and a lowered standby position placed on opposite sides of said endless path (18).

5. A unit as claimed in Claim 4, **characterized by** also comprising retaining means (21) for holding the other of said glass sheets (3) (4) in a fixed position.

6. A unit as claimed in Claim 4 or 5, **characterized in that** said powered actuating means (33); (53) comprise, for each of said supporting cantilever arms (26), a respective linear actuator (33) independent of the other linear actuators; and means (48) for synchronizing said linear actuators (33) with said drive means (16) of said dispenser head (14).

7. A unit as claimed in Claim 4 or 5, **characterized in that** said powered actuating means (53) comprise cam means (57) or connecting rod/crank means; and means for synchronizing said cam means with said drive means (16) of said dispenser head (14).

8. A unit as claimed in Claim 7, **characterized in that** said cam means (57) comprise a cam (58) common to all of said supporting cantilever arms (26); each of said supporting cantilever arms (26) comprising a cam follower (59) cooperating with the common said cam (58).

9. A unit according to any one of claims 4 to 8, **characterized in that** it further comprises drive means (53) common to all of said cantilever arms (26) for simultaneously translating the cantilever arms (26) along a closed loop (P) of advancement of said assembly (8) completed the deposit of the said sealant.

## Patentansprüche

1. Verfahren zur Herstellung von Isolierglas (2), wobei das Verfahren die folgenden Schritte aufweist: Bilden einer Anordnung (8) mit mindestens zwei einander zugewandten Glasplatten (3) (4) und mindestens einem die Glasplatten (3) (4) voneinander trennenden inneren Abstandsrahmen (5); Halten der Anordnung (8) in einer im Wesentlichen vertikalen Position; und Aufbringen eines Dichtmittelwulsts (7) auf den Außenumfangsrand der Anordnung (8) unter Verwendung eines Ausgabekopfs (14), wobei das Aufbringen des Dichtmittels die folgenden Schritte aufweist: Stationär-Halten der Anordnung (8) während der gesamten für das Aufbringen des Dichtmittels erforderlichen Zeitdauer und Bewegen des Ausgabekopfs (14) entlang einer Endlosbahn (18) um die Anordnung (8) herum; wobei das Bewegen des Ausgabekopfs (14) entlang der Endlosbahn (18) die folgenden Schritte aufweist: Auflegen mindestens einer der Glasplatten (3) (4) auf darunter befindliche, bewegbare, stützende, gerade Auslegerarme (26); nacheinander erfolgendes Lösen eines oder mehrerer Stützarme (31) von der Anordnung (8), um den Ausgabekopf (14) durchzulassen; und Bewegen mindestens einiger der Stützarme (26) zurück an die Anordnung (8), sobald der Ausgabekopf (14) diese Arme passiert hat, wobei die Stützarme (26) von der Anordnung (8) durch Drehen um eine im Wesentlichen horizontale Achse (30) (56) gelöst werden, welche parallel zu der größten oder Hauptfläche (A) der Glasplatten (3) (4) verläuft; wobei jeder der Arme (26) senkrecht von einer zu der Achse (30) koaxialen, horizontalen Welle (25) absteht und zwischen einer angehobenen Stützposition und einer abgesenkten Standby-Position, die sich auf gegenüberliegenden Seiten der Endlosbahn (18) befinden, unabhängig von den anderen Armen um die Achse (30) drehbar ist.

2. Verfahren nach Anspruch 1, **dadurch gekennzeichnet, dass** beim Aufbringen des Dichtmittels die andere der Glasplatten durch von den Auslegerarmen (26) verschiedene Halteeinrichtungen (21) in einer festen Position gehalten wird.

3. Verfahren nach Anspruch 1, **gekennzeichnet durch** das Halten der Auslegerarme (26) in Kontakt mit der Anordnung (8) und das Bewegen der Auslegerarme (26) parallel zu sich selbst, sobald das Dichtmittel aufgebracht wurde.

4. Einheit (1) zum Herstellen von Isolierglas (2) mit einer Anordnung (8), welche ihrerseits mindestens zwei einander zugewandte Glasplatten (3) (4), mindestens einen die Glasplatten (3) (4) voneinander trennenden Innenrahmen (5) und einen Wulst (7) aus Dichtmaterial aufweist, der sich um den Außenumfangsrand der Anordnung (8) erstreckt; wobei die Einheit (1) Stützeinrichtungen (11) zum Stützen der Anordnung (8) in einer im Wesentlichen vertikalen Position, und einen Ausgabekopf (14) zum Aufbringen des Dichtmittels und zum Bilden des Wulstes (7) aufweist; wobei die Stützeinrichtungen (11) die Anordnung (8) in einer festen Position stützen und eine Anzahl von bewegbaren, stützenden, geraden Auslegerarmen (26) unter mindestens einer der Glasplatten (3) (4) und angetriebene Betätigungseinrichtungen (33) (53) zum Bewegen der stützenden Auslegerarme (26) in und aus einer Stützposition, in welcher diese die Anordnung (8) stützen, aufweisen; wobei die Einheit (1) ferner Antriebseinrichtungen (16) zum Bewegen des Ausgabekopfs (14) entlang einer um die Anordnung (8) verlaufenden Endlosbahn (18) aufweist, wobei jeder der stützenden Auslegerarme (26) senkrecht von einer zu einer horizontalen Achse (30) (56) koaxialen horizontalen Welle (25) absteht und unabhängig von den anderen Auslegerarmen (26) um die zu der größten oder Hauptfläche (A) der Glasplatten (3) (4) parallele horizontale Achse (30) (56) zwischen einer erhabenen Stützposition und einer abgesenkten Standby-Position, die sich auf gegenüberliegenden Seiten der Endlosbahn (18) befinden, dreht.

5. Einheit nach Anspruch 4, **dadurch gekennzeichnet, dass** sie ferner Rückhalteeinrichtungen (21) zum Halten der anderen Glasplatte (3) (4) in einer festen Position aufweist.

6. Einheit nach Anspruch 4 oder 5, **dadurch gekennzeichnet, dass** die angetriebenen Betätigungseinrichtungen (33) (53) für jeden der stützenden Auslegerarme (26) einen jeweiligen linearen Aktuator (33) aufweisen, der von den anderen linearen Aktuatoren unabhängig ist; und Einrichtungen (48) zum Synchronisieren der linearen Aktuatoren (33) mit der Antriebseinrichtung (16) des Ausgabekopfs (14).

7. Einheit nach Anspruch 4 oder 5, **dadurch gekennzeichnet, dass** die angetriebenen Betätigungseinrichtungen (53) Nockeneinrichtungen (57) oder Kurbelstangen/Kurbeleinrichtungen aufweisen; und Einrichtungen zum Synchronisieren der Nockeneinrichtungen mit der Antriebseinrichtung (16) des Ausgabekopfs (14).

8. Einheit nach Anspruch 7, **dadurch gekennzeichnet, dass** die Nockeneinrichtungen (57) einen Nocken (58) aufweisen, der allen stützenden Auslegerarmen (26) gemeinsam ist; wobei jeder der stützenden Auslegerarme (26) einen mit dem gemeinsamen Nocken (58) zusammenwirkenden Nockenfolger (59) aufweist.

9. Einheit nach einem der Ansprüche 4 bis 8, **dadurch gekennzeichnet, dass** sie ferner allen Auslegerarmen (26) gemeinsame Antriebseinrichtungen (53) zum gleichzeitigen Verschieben der Auslegerarme (26) entlang einer geschlossenen Vorwärtsbewegungsbahn (P) der Anordnung (8), wenn das Aufbringen des Dichtmittels abgeschlossen ist.

## Revendications

1. Procédé pour fabriquer du verre isolant (2), ce procédé comportant les étapes de réalisation d'un assemblage (8) comprenant au moins deux feuilles de verre (3)(4) et au moins un cadre d'espacement intérieur (5) séparant les feuilles de verre (3)(4); de maintien dudit assemblage (8) dans une position sensiblement verticale ; et de dépôt d'un bourrelet de joint (7) de scellement sur le bord périphérique dudit assemblage (8) en utilisant une tête de distribution (14) ; ledit scellement comportant les phases de maintien de l'assemblage (8) à l'état stationnaire pendant le temps requis pour déposer ledit joint de scellement et de déplacement de la tête de distribution (14) le long d'une trajectoire sans fin (18) autour dudit assemblage (8) ; de déplacement de ladite tête de distribution (14) le long de ladite trajectoire sans fin (18) ; comportant les étapes consistant à appuyer au moins sur l'une desdites feuilles de verre (3)(4) sur des bras de support rectilignes (26) en porte-à-faux disposés en-dessous ; à détacher un ou plus desdits bras de supports (31) successivement dudit assemblage (8) pour laisser la tête de distribution (14) passer en travers ; et déplacer au moins quelques uns desdits bras de support (26) en retour sur ledit assemblage (8) lorsque ladite tête de distribution (14) est passée, les bras de supports (26) étant détachés dudit assemblage (8) par rotation autour d'un axe sensiblement horizontal (30)(56), parallèle à la plus grande ou principale surface (A) desdites feuilles de verre (3)(4), chacun desdits bras de supports (26) se projetant perpendiculairement depuis l'arbre horizontal (25) coaxial audit axe (30) et étant rotatif indépendamment des autres bras autour dudit axe (30) entre une position de support dressée et une position fixe abaissée, disposée sur les côtés opposés de ladite trajectoire sans fin (18).

2. Procédé selon la revendication 1, **caractérisé en ce que**, lors du dépôt du joint de scellement, l'autre desdites feuilles de verre est maintenue dans une position fixe par des moyens de maintien (21) autres que les bras en porte-à-faux (26).

3. Procédé selon la revendication 1, **caractérisé en ce que** l'on maintient lesdits bras en porte-à-faux (26) en contact avec ledit assemblage (8) et l'on déplace lesdits bras en porte-à-faux (26) parallèlement à eux-mêmes lorsque le scellement est déposé.

4. Unité (1) pour fabriquer du verre isolant (2), ce procédé comportant les un assemblage (8) comprenant en fait au moins deux feuilles de verre (3)(4) disposées face à face ; au moins un cadre d'espacement intérieur (5) séparant les feuilles de verre (3)(4); et un bourrelet de joint (7) de scellement s'étendant sur le bord périphérique dudit assemblage (8) ; l'unité (1) comprenant des moyens de support (11) pour supporter ledit assemblage dans une position sensiblement verticale ; et une tête de distribution (14) pour déposer ledit scellement et former ledit bourrelet de joint (7) ; lesdits moyens de support (11) supportant ledit assemblage (8) dans une position fixe et comportant plusieurs bras de support rectilignes (26) en porte-à-faux ; disposés en-dessous d'au moins une des feuilles de verre (3)(4) et des moyens d'actionnement motorisés (33)(53) pour déplacer lesdits bras de support rectilignes (26) en porte-à-faux vers et en provenance d'une position de support supportant ledit assemblage (8) ; l'unité (1) comportant également des moyens d'entraînement (16) pour déplacer la tête de distribution (14) le long d'une trajectoire sans fin (18) autour dudit assemblage (8) ; chacun desdits bras de supports (26) se projetant perpendiculairement depuis un arbre horizontal (25) coaxial à un axe horizontal (30)(56) et tournant, indépendamment par rapport aux autres bras (26) en porte-à-faux et autour dudit axe horizontal (30)(56) parallèle à la surface majeure ou principale (A) desdites feuilles de verre (3)(4) entre une position de support dressée et une position fixe abaissée, disposée sur les côtés opposés de ladite trajectoire sans fin (18).

5. Unité selon la revendication 4, **caractérisée en ce qu'**elle comporte également des moyens de retenue (21) pour maintenir l'autre feuille de verre (3)(4) dans une position fixe.

6. Unité selon la revendication 4 ou 5, **caractérisée en ce que** les moyens d'actionnement motorisés (33)(53) comportent pour chacun des bras de supports (26) en porte-à-faux un actionneur indépendant linéaire (33) correspondant de l'autre actionneur linéaire (53), pour la synchronisation dudit actionneur linéaire (33) avec ledit moyen motorisé (16) de ladite tête de distribution (14).

7. Unité selon la revendication 4 ou 5, **caractérisée en ce que** ledit actionneur linéaire motorisé (53) comporte des moyens à came (57) ou des moyens à tige ou bielle de connexion ; et des moyens pour synchroniser lesdits moyens à came avec lesdits moyens d'entraînement (16) de la tête de distribution (14).

8. Unité selon la revendication 7, **caractérisée en ce que** lesdits moyens à came (57) comportent une came (58) commune à tous les bras de support en porte-à-faux (26) ; chacun desdits bras de support en porte-à-faux (26) comportant un suiveur de came (59) qui coopère avec l'ensemble desdites cames (58).

9. Unité selon n'importe laquelle des revendications 4 à 8, **caractérisée en ce qu'**elle comporte en outre des moyens d'entraînement (53) communs à tous les bras de support en porte-à-faux (26) pour translater simultanément les bras de support en porte-à-faux (26) le long d'une boucle fermée (P) d'avancement dudit assemblage (8) complété par le dépôt dudit joint de scellement.
